# EUROPÄISCHE PATENTSCHRIFT

(11) **EP 0 997 447 B1**
(45) Veröffentlichungstag und Bekanntmachung des Hinweises auf die Patenterteilung: **17.07.2002**
(21) Anmeldenummer: 99119593.4
(22) Anmeldetag: 02.10.1999
(51) Int. Cl.: C04B 28/14, F41J 1/01, A63F 9/02

(54) **Verfahren zur Herstellung von Zielobjekten für das sportliche Übungs- und Wettkampfschiessen und nach diesem Verfahren hergestellte Zielobjekte**
Process for producing targets for sports practice and competition shooting, and target produced thereof
Procédé de production de cibles pour l'entrainement et la compétition de tir sportif et cible produite selon ledit procédé

(30) Priorität: 10.10.1998 DE 19846782
(43) Veröffentlichungstag der Anmeldung: 03.05.2000
(73) Patentinhaber: Raiffeisen-Waren-Zentrale Rhein-Main eG, 50669 Köln (DE); Gaese, Dagmar, Dr., 51503 Rösrath (DE); Schilling, Ehrhard, Prof. Dr., 50968 Köln (DE)
(72) Erfinder: Gaese, Dagmar, Dr., 51503 Rösrath (DE); Schilling, Ehrhard, Prof. Dr., 50968 Köln (DE); Wödy, Klaus, 50937 Köln (DE)
(74) Vertreter: Sroka, Peter-Christian, Dipl.-Ing.

(56) Entgegenhaltungen:
- EP-A- 0 632 101
- GB-A- 1 594 292
- US-A- 4 382 054
- US-A- 5 676 377

## Beschreibung

Die Erfindung betrifft ein Verfahren zur Herstellung von Zielobjekten für das sportliche Übungs- und Wettkampfschießen, bei welchem Verfahren man Ton und/oder Gesteinsmehl als Trägerstoff mit Bindemittel und weiteren Additiven zur Herstellung eines Vorproduktes vermischt, das man anschließend zu dem Zielobjekt verformt.

Als Binde- und Härtemittel werden in der Regel umweltbelastender Kohlen- oder Petrolpech verwendet, woraus sich infolge der polyzyklischen aromatischen Kohlenwasserstoffe (PAK) ein beträchtliches Umweltbelastungspotential ergibt. So enthalten ältere Zielobjekte dieser Art bis zum 2 % dieser umweltbelastenden Stoffgruppe, was zu PAK-Gehalten von bis zu. 1000 mg/kg Boden in der Wurfscheiben-Depositionszone bei bestehenden Schießanlagen führte. Der Boden ist daher in der Regel als Sonderabfall zu behandeln.

Durch den teilweisen Ersatz von PAK-haltigen Bindemitteln durch ökologisch unbedenkliche Stoffe konnten Zielobjekte der hier in Frage stehenden Art mit deutlich verringertem PAK-Gehalt (Gesamtgehalte EPA 16 < 50 ppm) hergestellt werden, was trotz einer Verbesserung dennoch nichts daran änderte, daß bei langjährigen Betrieb von Schießanlagen durch große Mengen von Wurfscheibensplittern dennoch ein weiteres wesentliches Belastungspotential vorliegt.

Die EP A 0 632 101 beschreibt ein Verfahres zur Herstellung von extrudates aus nachwachsenden Rohstoffes unter Verwendung einer großes Anzahl von biopolymeres und mineralischen Rohstoffes.

Der Erfindung liegt die Aufgabe zugrunde, ein Verfahren zur Herstellung von Zielobjekten der hier in Frage stehenden Art und nach diesem Verfahren hergestellte Zielobjekte ohne den Einsatz von PAK-haltigen Bindemitteln zu schaffen.

Zur Lösung dieser Aufgabe ist das erfindungsgemäße Verfahren dadurch gekennzeichnet, daß man ein Gemenge aus
30 - 70 Gew.-% Trägerstoff
10 - 40 Gew.-% Gips
10 - 20 Gew.-% Getreidemehl
unter Zusatz von ausreichend Wasser sowie weiteren flüssigen und/oder halbflüssigen Additiven zu einem breiartigen Gemisch verarbeitet, das durch Extrudieren und anschließendes Trocknen zu dem Vorprodukt oder dem fertigen Zielprodukt verformt wird.

Es hat sich überraschenderweise herausgestellt, daß Gips insbesondere in Verbindung mit Getreidemehl in der Lage ist, die Funktion als Bindemittel zu erfüllen und außerdem aufgrund seiner spezifischen Dichte auch die erforderliche Dichte des Zielobjektes in der Größenordnung von 1,9 bis 2,0 zu gewährleisten, die notwendig ist, um stabile Flugeigenschaften des Zielobjektes zu erreichen.

Das Getreidemehl hat weiterhin die Funktion eines Zellenfüllers. Vorzugsweise wird sogenanntes 45-er Mehl benutzt. Das Getreidemehl wirkt bei auf dem Boden abgelagerten Zielobjekt- bzw. Wurfscheibensplittern als Verwitterungshilfe, wobei diese Funktion noch durch in der Partikelgröße definierte Strohzusätze unterstützt bzw. verbessert werden kann. Zugesetztes Stroh soll fein vermahlen und, bezogen auf den Faseranteil eine Faserlänge ≤ 2 mm haben, um einen das Zersplittern der Zielobjekte bzw. Wurfscheiben ggf. beeinträchtigenden Armiereffekt zu vermeiden. Der Strohanteil soll maximal 5 Gew.-% betragen.

Um die Verarbeitbarkeit des zu extrudierenden Materials zu verbessern, werden entsprechend den Ansprüchen 2 bis 4 pflanzliche Öle zugesetzt, um das breiartige Gemisch geschmeidig zu machen. Sojaöl zeichnet sich durch eine erhöhte Temperaturbeständigkeit aus, während das nicht so temperaturbeständige Rapsöl die Herstellungskosten verbilligt. Als zusätzliche Bindehilfe können ca. 2 - 4 Gew.-% Vinasse und/oder Melasse zugesetzt werden.

Der als Trägerstoff verwendete Ton mit einem bevorzugten Kaolinanteil bis zu 100 Gew.-% soll vorzugsweise eine Partikelgröße ≤ 2 µm haben.

Die einzelnen Komponenten werden in einer ersten Stufe grob vermischt, wobei der eigentliche Mischvorgang anschließend innerhalb des Extruders stattfindet, dem über seine Länge in Abhängigkeit von der speziellen Zusammensetzung des Gemenges bzw. Gemischs und auch als Temperaturregler zusätzliches Wasser zugeführt wird. Bevorzugt wird ein Extruder verwendet, der eine Materialeinzugsstufe, eine daran anschließende, gegen Widerstand arbeitende Kompressionsstufe und eine daran anschließende Expansionsstufe aufweist. Innerhalb der Extruderstufe ist darauf zu achten, daß die Temperatur des Gemischs auf maximal 160 °C, vorzugsweise 150 - 140 °C, eingestellt wird.

Erfindungsgemäß kann sich an die Expansionsstufe eine Spritzguß-Extruderstufe anschließen, in der direkt das fertige Zielobjekt, z.B. eine Wurfscheibe oder dergleichen mit den notwendigen Abmessungen hergestellt wird.

Es besteht jedoch auch die Möglichkeit, zuerst ein granulatförmiges Vorprodukt herzustellen, das zur weiteren Verarbeitung abgelagert werden kann. Wenn aus diesem granulatförmigen Vorprodukt wiederum mittels eines Extruders der oben beschriebenen Art unter Flüssigkeitszusatz das fertige Zielobjekt hergestellt werden soll, kann es zweckmäßig und vorteilhaft sein, aus diesem Vorprodukt Staubpartikel abzuscheiden.

Vorzugsweise führt man dem Extruder ein Gemenge aus
50 - 65 Gew.-%, insbesondere etwa 60 Gew.-% Trägerstoff,
10 - 20 Gew.-%, vorzugsweise etwa 15 Gew.-% Gips
13 - 17 Gew.-%, vorzugsweise etwa 15 Gew.-% Getreidemehl
mit einem

| | |
|---|---|
| Wasseranteil von | 2 - 3 Gew.-%, |
| einem Anteil von | 3 - 4 Gew.-% pflanzlichem Öl und einem |
| Melasse/Vinasseanteil von | 2 - 4 Gew.-% zu. |

Die Erfindung betrifft auch das nach dem oben beschriebenen Verfahren hergestellte Zielobjekt.

## Patentansprüche

1. Verfahren zur Herstellung von Zielobjekten für das sportliche Übungs- und Wettkampfschießen, bei welchem Verfahren man Ton und/oder Gesteinsmehl als Trägerstoff mit Bindemittel und weiteren Additiven zur Herstellung eines Vorproduktes vermischt, das man in einem anschließenden Arbeitsgang zu dem Zielobjekt verformt, **dadurch gekennzeichnet, daß** man ein Gemenge aus
30 - 70 Gew.-% Trägerstoff
10 - 40 Gew.-% Gips
10 - 20 Gew.-% Getreidemehl
unter Zusatz von ausreichend Wasser sowie weiteren flüssigen und/oder halbflüssigen Additiven zu einem breiartigen Gemisch verarbeitet, das durch Extrudieren und anschließendes Trocknen zu dem Vorprodukt oder dem fertigen Zielprodukt verformt wird.

2. Verfahren nach Anspruch 1, **dadurch gekennzeichnet, daß** man dem Gemenge als Additiv ca. 2 - 5 Gew.-%, vorzugsweise 3 - 4 Gew.-%, pflanzliches Öl zusetzt.

3. Verfahren nach Anspruch 2, **dadurch gekennzeichnet, daß** man als pflanzliches Öl Sojaöl verwendet.

4. Verfahren nach Anspruch 2, **dadurch gekennzeichnet, daß** man als pflanzliches öl Rapsöl verwendet.

5. Verfahren nach Anspruch 1 oder 2, **dadurch gekennzeichnet, daß** man dem Gemenge als weiteres Additiv ca. 2 - 4 Gew.-% Vinasse und/oder Melasse zusetzt.

6. Verfahren nach Anspruch 1, **dadurch gekennzeichnet, daß** man als Trägerstoff Ton mit einer Partikelgröße ≤ 2 µm verwendet.

7. Verfahren nach Anspruch 6, **dadurch gekennzeichnet, daß** der Ton einen Kaolinanteil von bis zu 100 Gew.-% aufweist.

8. Verfahren nach Anspruch 1, **dadurch gekennzeichnet, daß** man als Getreidemehl Roggenmehl verwendet.

9. Verfahren nach Anspruch 1, **dadurch gekennzeichnet, daß** man dem Gemenge maximal 5 Gew.-% fein zermahlenes Stroh zusetzt, dessen Faseranteil eine Faserlänge ≤ 2 mm hat.

10. Verfahren nach einem oder mehreren der Ansprüche 1 bis 9, **dadurch gekennzeichnet, daß** das Vermischen der einzelnen Komponente innerhalb des Extruders stattfindet.

11. Verfahren nach Anspruch 10, **dadurch gekennzeichnet, daß** man einen Extruder verwendet, der eine Materialeinzugsstufe, eine daran anschließende, gegen Widerstand arbeitende Kompressionsstufe und eine daran anschließende Expansionsstufe aufweist.

12. Verfahren nach Anspruch 11, **dadurch gekennzeichnet, daß** sich an die Expansionsstufe eine Spritzguß-Extruderstufe anschließt.

13. Verfahen nach Anspruch 10, **dadurch gekennzeichnet, daß** man innerhalb der Extruderstufe die Temperatur des Gemisches auf maximal 160 °C, vorzugsweise 125 - 140 °C, einstellt.

14. Verfahren nach Anspruch 11, **dadurch gekennzeichnet, daß** man aus einem durch Spritzguß extrudierten, zu dem fertigen Zielobjekt zu verarbeitenden Vorprodukt Staubpartikel abscheidet.

15. Verfahren nach Anspruch 1, **dadurch gekennzeichnet, daß** man dem Mischextruder ein Gemenge aus
50 - 65 Gew.-%, insbesondere etwa 60 Gew.-% Trägerstoff,
10 - 20 Gew.-%, vorzugsweise etwa 15 Gew.-% Gips,
13 - 17 Gew.-%, vorzugsweise etwa 15 Gew.-% Getreidemehl
mit einem
| | |
|---|---|
| Wasseranteil von | 2 - 3 Gew.-%, |
| einem Anteil von | 3 - 4 Gew.-% pflanzlichem Öl und einem |
| Vinasseanteil von | 2 - 4 Gew.-% zuführt. |

16. Zielobjekt, insbesondere Wurf-, Gleit- oder Rollscheibe, für das sportliche oder jagdliche Übungsschießen, **dadurch gekennzeichnet, daß** es gemäß einem Verfahren nach einem oder mehreren der Ansprüche 1 bis 15 hergestellt ist.

## Claims

1. A process for making target articles for sporting target practice and competitive shooting, in which process day and/or crushed rock, as the carrier, is mixed with binder and further additives to make an intermediate product which is shaped in a subsequent operation to give the target article, **characterised in that** a physical mixture comprising
30 - 70% by weight of carrier
10 - 40% by weight of gypsum
10 - 20% by weight of cereal flour
is processed, with the addition of sufficient water and further liquid and/or semi-liquid additives, to give a slurry-like mixture which is shaped by extrusion and subsequent drying to give the intermediate product or the finished target product.

2. A process according to Claim 1, **characterised in that** there is added to the physical mixture as an additive approximately 2 - 5% by weight, preferably 3 - 4% by weight, of vegetable oil.

3. A process according to Claim 2, **characterised in that** soya oil is used as the vegetable oil.

4. A process according to Claim 2, **characterised in that** rapeseed oil is used as the vegetable oil.

5. A process according to Claim 1 or 2, **characterised in that** approximately 2 - 4% by weight of vinasse and/or molasses is added to the physical mixture as a further additive.

6. A process according to Claim 1, **characterised in that** clay having a particle size ≤ 2 µm is used as the carrier.

7. A process according to Claim 6, **characterised in that** the clay has a kaolin content of up to 100% by weight.

8. A process according to Claim 1, **characterised in that** rye flour is used as the cereal flour.

9. A process according to Claim 1, **characterised in that** a maximum of 5% by weight of finely ground straw whereof the fibre content has a fibre length ≤ 2 mm is added to the physical mixture.

10. A process according to one or more of Claims 1 to 9, **characterised in that** mixing of the individual components is carried out within an extruder.

11. A process according to Claim 10, **characterised in that** an extruder which has a material feed zone, adjacent thereto a compression zone operating in opposition to resistance, and adjacent thereto an expansion zone is used.

12. A process according to Claim 11, **characterised in that** adjoining the expansion zone is an injection moulding extruder zone.

13. A process according to Claim 10, **characterised in that** within the extruder zone the temperature of the mixture is adjusted to a maximum of 160°C, preferably 125 - 140°C.

14. A process according to Claim 11, **characterised in that** particles of dust are separated off from an intermediate product which is extruded by injection moulding and is to be processed to give the finished target article.

15. A process according to Claim 1, **characterised in that** there is supplied to the mixing extruder a physical mixture comprising
50- 65% by weight, in particular approximately 60% by weight, of carrier,
10- 20% by weight, preferably approximately 15% by weight, of gypsum,
13- 17% by weight, preferably approximately 15% by weight, of cereal flour
having a
| | |
|---|---|
| water content of | 2 - 3% by weight, |
| a content of | 3 - 4% by weight of vegetable oil, and |
| a vinasse content of | 2 - 4% by weight. |

16. A target article, in particular a disc for throwing, sliding or rolling, for sporting or hunt target practice, **characterised in that** it is made in accordance with a process according to one or more of Claims 1 to 15.

## Revendications

1. Procédé de fabrication d'objets cibles pour le tir sportif d'exercice et de compétition, dans lequel on mélange de l'argile et/ou de la poudre minérale comme matière support avec un liant et d'autres additifs pour fabriquer un avant-produit que, dans une opération suivante, on transforme en l'objet cible, **caractérisé par le fait qu'**on transforme un mélange de
30 à 70 % en poids de matière support
10 à 40 % en poids de gypse
10 à 20 % en poids de farine de céréales
avec addition de suffisamment d'eau et d'autres additifs liquides et/ou semi-liquides en un mélange du genre bouillie qu'on transforme par extrusion et ensuite séchage en l'avant-produit ou le produit cible terminé.

2. Procédé selon la revendication 1, **caractérisé par le fait qu'**on ajoute au mélange comme additif environ 2 à 5 % en poids, de préférence 3 à 4 % en poids, d'huile végétale.

3. Procédé selon la revendication 2, **caractérisé par le fait qu'**on utilise comme huile végétale de l'huile de soja.

4. Procédé selon la revendication 2, **caractérisé par le fait qu'**on utilise comme huile végétale de l'huile de colza.

5. Procédé selon l'une des revendications 1 et 2, **caractérisé par le fait qu'**on ajoute au mélange comme autre additif environ 2 à 4 % en poids de vinasse et/ou de mélasse.

6. Procédé selon la revendication 1, **caractérisé par le fait qu'**on utilise comme matière support de l'argile ayant une grosseur de particules inférieure ou égale à 2 microns.

7. Procédé selon la revendication 6, **caractérisé par le fait que** l'argile présente une teneur en kaolin pouvant aller jusqu'à 100 % en poids.

8. Procédé selon la revendication 1, **caractérisé par le fait qu'**on utilise comme farine de céréales de la farine de seigle.

9. Procédé selon la revendication 1, **caractérisé par le fait qu'**on ajoute au mélange au maximum 5 % en poids de paille finement broyée dont la partie fibres a une longueur de fibres inférieure ou égale à 2 mm.

10. Procédé selon une ou plusieurs des revendications 1 à 9, **caractérisé par le fait que** le mélange des différents constituants a lieu à l'intérieur de l'extrudeuse.

11. Procédé selon la revendication 10, **caractérisé par le fait qu'**on utilise une extrudeuse qui présente un étage d'entrée de matière, suivi d'un étage de compression fonctionnant contre une résistance, lui-même suivi d'un étage d'expansion.

12. Procédé selon la revendication 11, **caractérisé par le fait que** l'étage d'expansion est suivi d'un étage d'extrudeuse de moulage par injection.

13. Procédé selon la revendication 10, **caractérisé par le fait qu'**à l'intérieur de l'étage d'extrudeuse, on règle la température du mélange à au maximum 160 °C, de préférence entre 125 et 140 °C.

14. Procédé selon la revendication 11, **caractérisé par le fait qu'**on sépare des particules de poussière d'un avant-produit extrudé par moulage par injection et à transformer en l'objet cible terminé.

15. Procédé selon la revendication 1, **caractérisé par le fait qu'**on apporte à l'extrudeuse-mélangeuse un mélange de
50 à 65 % en poids, en particulier environ 60 % en poids, de matière support,
10 à 20 % en poids, de préférence environ 15 % en poids, de gypse,
13 à 17 % en poids, de préférence environ 15 % en poids, de farine de céréales,
avec
une proportion de 2 à 3 % en poids d'eau,
une proportion de 3 à 4 % en poids d'huile végétale et
une proportion de 2 à 4 % en poids de vinasse.

16. Objet cible, en particulier disque à lancer, glissant ou roulant, pour le tir d'exercice sportif ou de chasse, **caractérisé par le fait qu'**il est fabriqué par un procédé selon une ou plusieurs des revendications 1 à 15.
